# EUROPÄISCHE PATENTSCHRIFT

(11) **EP 1 130 274 B1**
(45) Veröffentlichungstag und Bekanntmachung des Hinweises auf die Patenterteilung: **26.05.2004**
(21) Anmeldenummer: 01810179.0
(22) Anmeldetag: 21.02.2001
(51) Int. Cl.: F16B 7/14, F16L 37/02

(54) **Verbindungselement**
Fastening element
Elément de fixation

(30) Priorität: 03.03.2000 DE 10010643
(43) Veröffentlichungstag der Anmeldung: 05.09.2001
(73) Patentinhaber: HILTI Aktiengesellschaft, 9494 Schaan (LI)
(72) Erfinder: Herb, Armin, 86974 Apfeldorf (DE); Fohrer, Marcus, 88138 Hergensweiler (DE); Hermann, Fritz, 86899 Landsberg (DE); Lopez Gordillo, Antonio, 46901 Monte Vedat - Torrent, Valencia (ES); Birnbaum, Ulrich, 86916 Kaufering (DE)
(74) Vertreter: Wildi, Roland

(56) Entgegenhaltungen:
- US-A- 3 934 315

## Beschreibung

Die Erfindung betrifft ein Verbindungselement für Bolzen mit einem Aufnahmeteil für den Bolzen nach dem Oberbegriff des Anspruchs 1, das jenem nach der US-A-3 934 315 gattungsgemäß ausgebildet ist.

Eine der am häufigsten eingesetzten Verbindungstechniken von zwei oder mehreren Teilen stellt die Bolzenverbindung dar. Dazu wird üblicherweise ein mit einer Aussenprofilierung versehener Bolzen mit einer Mutter verbunden, an der eine korrespondierende Aufnahme ausgebildet ist. Eine weitere Lösung, die auch für Bolzen ohne Aussengewinde geeignet ist, stellt die Klemmverbindung dar. Dazu wird das mit dem Bolzen zu verbindende Verbindungselement mit einer Bohrung versehen, die eine Klemmvorrichtung aufweist. Zweckmässigerweise ist ein solches Verbindungselement auch dazu geeignet, Bolzen mit einer Aussenprofilierung aufzunehmen. Die zu verbindenden Teile können mit dem Bolzen oder dem Verbindungselement verbunden sein. Oft bildet der Bolzen auch einen Bestandteil eines der Teile. Das zweite Teil ist dann meist mit einer Bohrung versehen, durch die der Bolzen gesteckt wird. Danach wird das Verbindungselement auf den Bolzens aufgedrückt. Es kann auch das Verbindungselement als Bestandteil eines der Teile vorliegen. Dann wird der Bolzen in das Verbindungselement eingedreht, der beispielsweise durch eine Bohrung im zweiten Teil gesteckt ist. Der Bolzen kann beispielsweise auch eine Gewindestange sein, die mit einer Halterung für Rohre verbunden ist.

Nachteilig bei bekannten Verbindungen sind die im allgemeinen langen Schraubstrecken, die bis zur geforderten festen Verbindung zwischen dem Schraubbolzen bzw. der Gewindestange und der Mutter durch umständliches Schrauben zu überwinden sind. Damit die Mutter einfach und zuverlässig auf das Aussengewinde des Schraubbolzens bzw. der Gewindestange aufschraubbar ist, muss der Gewindeeinlauf frei von Beschädigungen sein. Diese können beispielsweise entstehen, wenn die Gewindestange auf die geforderte Länge abgeschnitten wird. Damit der Gewindeeinlauf wieder gängig wird, muss die Gewindestange oftmals umständlich nachgearbeitet werden.

Aus dem Stand der Technik sind zwar vereinzelte Lösungen bekannt, welche als Verbindungselemente aufgefasst werden können. Diese erfüllen jedoch meist keine Brandschutzverordnungen und scheitern überdies vielfach hinsichtlich der geforderten Lastwerte. Beispielsweise sind aus dem Sanitärbereich Kunststoffmuttem bekannt, die in einem gekippten Zustand auf eine Gewindestange aufschiebbar und nach dem Zurückkippen festschraubbar sind. Derartige Kunststoffmuttern sind meist nur umständlich zu handhaben und wegen ihrer Brennbarkeit für Abhängungen oder ähnliche sicherheitsrelevante Befestigungen nicht einsetzbar. Muttern aus feuerbeständigen Materialien, wie beispielsweise Aluminium oder Blech besitzen meist keine Schnellanbindemöglichkeit und bestehen vielfach nur aus einem dünnen Material, das die geforderten Lastwerte nicht erreicht.

Die US 3,934,315 A zeigt ein Verbindungselement für Bolzen mit einem Aufnahmeteil für den Bolzen, das mit einer Bohrung versehen ist. Die Bohrung im Aufnahmeteil weist einen zylindrischen Aufnahmebereich auf, in dem ein Verriegelungselement angeordnet ist, das an den Bolzen kraftschlüssig angreift. Das Verriegelungselement ist von einem in Aufnahmerichtung des Bolzens abgestützten radial aufweitbaren Ringkörper gebildet, dessen lichte Weite zumindest kleiner als der Aussendurchmesser des Bolzens ist und dessen axiale Länge im Wesentlichen der Länge des Aufnahmebereichs entspricht. In einer Variante dazu ist der Bolzen selbst mit dem radial aufweitbaren Ringkörper versehen und die Vorrichtung wird in die Bohrung des Aufnahmeteils eingeführt, wobei sich der radial aufweitbare Ringkörper mit der Wandung der Bohrung verspannt. Zur Erleichterung des Einschubs des Bolzens weist die Bohrung am einführseitigen Ende eine trichterförmige Aufweitung auf. Nachteilig an dieser Lösung ist, dass der Bolzen nur über die konstante Klemmwirkung des radial aufweitbaren Ringkörpers gehalten ist. Bei hohen Belastungen, insbesondere bei hohen Zugbelastungen, des Bolzen kann die Verbindung durch Herausgleiten des Bolzens, beziehungsweise des Bolzens und des radial aufweitbaren Ringkörpers versagen.

Aufgabe der vorliegenden Erfindung ist es daher, ein Verbindungselement für Bolzen zu schaffen, das wirtschaftlich herstellbar ist und eine sichere Verbindung auch bei hohen Belastungen gewährleistet.

Erfindungsgemäss wird die Aufgabe dadurch gelöst, dass sich die Bohrung im Aufnahmeteil entgegen der Aufnahmerichtung des Bolzens an den zylindreschen Aufnahmebereich anschliessend wenigstens abschnittsweise entgegen der Aufnahmerichtung des Bolzens verjüngt.

Dadurch, dass der Ringkörper radial aufweitbar ausgestaltet ist, kann der Bolzen sehr einfach und schnell durch blosses Einschieben in Aufnahmerichtung bewegt werden. Das vorlaufende Ende des Bolzens weitet den Ringkörper, der im zylindrischen Aufnahmebereich angeordnet ist auf. Bei Zugbelastung der Verbindung wird der Ringkörper gegen die sich entgegen der Aufnahmerichtung des Bolzens verjüngende Bohrung gedrückt und ein radiales Aufweiten dadurch verhindert. Zwischen dem Ringkörper und der Mantelfläche des Bolzens entsteht eine kraftschlüssige oder anders ausgedrückt eine reibschlüssige Verbindung. Die Justierbarkeit ist einfach zu bewerkstelligen, indem der Bolzen mehr oder weniger weit eingeschoben wird. Falls der Bolzen eine Aussenprofilierung aufweist entsteht eine Kombination aus kraftschlüssiger und reibschlüssiger Verbindung, da der Ringkörper zumindest teilweise in die Aussenprofilierung eingreift. Ein Lösen der Verbindung kann in bei einem mit einer Aussenprofilierung versehenen Bolzen durch Herausschrauben des Bolzens aus dem Befestigungselement erreicht werden. Bei einer Gewindestange ist eine Nachbearbeitung, beispielsweise ein Entgraten, eines beispielsweise durch Abschneiden mit einem Bolzenschneider beschädigten Gewindeeinlaufs unnötig, da die Festlegung des Bolzens nicht durch zusammenwirkende Gewinde erfolgt. Der Ringkörper verrastet mit nahezu jeder Art von Profilierung, die etwa ringförmig oder schraubenförmig umlaufende Vertiefungen in der Mantelfläche aufweist.

Vorteilhafterweise ist der Ringkörper als Federkörper ausgebildet, sodass beim Einschieben des Bolzens der Ringkörper teilweise nachgibt und somit ein leichtes Einschieben sichergestellt ist. Durch einen in Aufnahmerichtung wirkenden Druck auf den Bolzen wird der als Federkörper ausgebildete Ringkörper geringfügig in Aufnahmerichtung gestaucht. Der Ringkörper erhält dadurch radial Platz, um sich aufzuweiten und über die Mantelfläche des Bolzens oder falls vorhanden, die Aufnahmeprofilierung des Bolzens, zu schnappen, was eine radiale Vorspannung zur Folge hat.

Vorzugsweise weist der Federkörper im entspannten Zustand eine grössere Länge auf als der Aufnahmebereich. Dadurch wird ein kontinuierliches Nachgreifen des Federkörpers am Bolzen gewährleistet. Wird die Verbindung einer Zugbelastung ausgesetzt, so befindet sich der Federkörper schon in Kontakt mit dem sich verjüngenden Bereich der Bohrung, sodass sich der Bolzen relativ zum Aufnahmeteil nicht verschiebt. Ausserdem wird durch die so erzielte Vorspannung des Federkörpers das Verklemmen des Federkörpers im Aufnahmebereich der Bohrung erreicht.

Zweckmässigerweise ist der Federkörper im wesentlichen als kegelstumpfförmige Schraubenfeder ausgebildet, um ein optimales Nachgreifen am Bolzen sicherzustellen. Durch eine derartige Ausbildung des Federkörpers wird eine Verdrehsicherung des Federkörpers im aufnahmerichtungsseitigen Aufnahmebereich des Bolzens verstärkt. Vorteilhafterweise steht der Federkörper in diesem Bereich mit der Bohrung zumindest teilweise in Kontakt. Durch die Reibung zwischen Bohrung und Ringkörper wird ein Verdrehen verhindert. Im gegenüberliegenden Aufnahmebereich wird der Ringkörper mit einem geringeren Aussendurchmesser ausgebildet, sodass ein radiales Aufweiten des Ringkörpers möglich ist.

Zweckmässigerweise besteht der Federkörper aus einem Federstahl oder einem Material welches etwa ein mindestens gleich grosses Elastizitätsmodul aufweist. Die Verwendung von hoch elastischem Materialien, insbesondere Federstahl bewirkt eine hohe Elastizität und ein zuverlässiges funktionieren des Verbindungselementes. Sowohl in radialer als auch axialer Richtung wirken auf den Federkörper beim Einführen des Bolzens Kräfte. Besonders wichtig für eine sichere Verbindung ist, dass der Federkörper eine genügend hohe Elastizität besitzt um auf die Mantelfläche des Bolzens, oder falls vorhanden in die Aussenprofilierung des Bolzens, sicher eingreifen zu können.

Die Erfindung wird nachstehend anhand eines Ausführungsbeispieles näher erläutert. Es zeigen:
- Fig. 1: ein erfindungsgemässes Verbindungselement im Querschnitt mit einem eingeführten Bolzen.
- Fig. 2: das in Fig. 1 dargestellte Verbindungselement ohne Bolzen

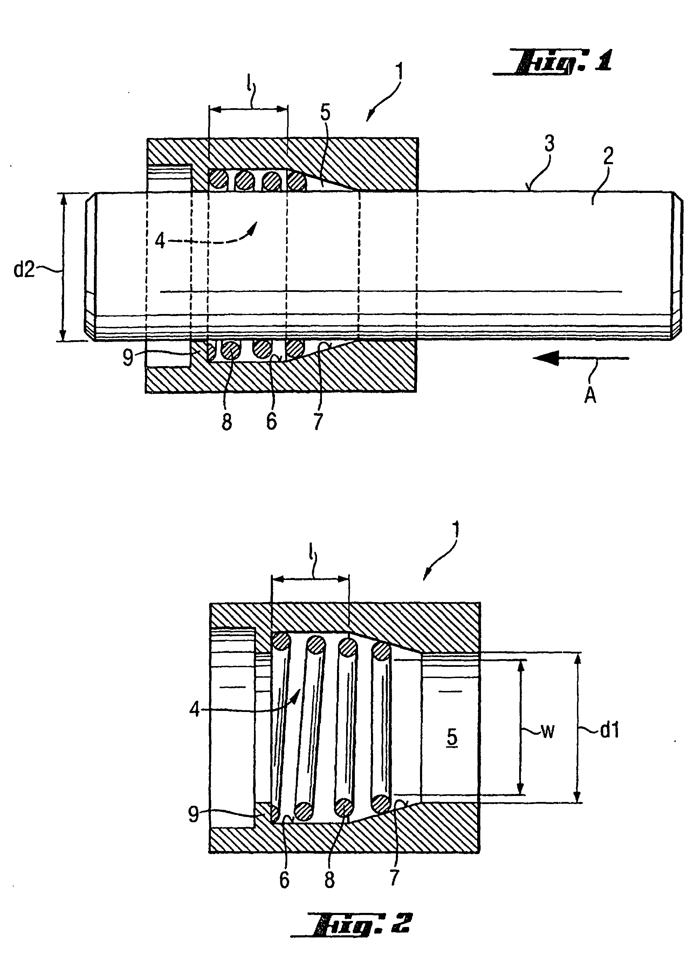

In der Fig. 1 und 2 ist ein erfindungsgemässes Verbindungselement dargestellt, das ein Aufnahmeteil 1 mit einer Bohrung 5 und ein in einem Aufnahmebereich 4 angeordnetes als Ringkörper ausgebildetes Verriegelungselement aufweist. Das Aufnahmeteil 1 kann ein separates Bauteil sein und beispielsweise nach Art einer Mutter ausgebildet sein. Es kann auch als integraler Bestandteil eines Befestigungsteils vorliegen, beispielsweise an einer Rohrschelle zur Aufnahme einer Gewindestange.

Die Bohrung 5 im Aufnahmeteil 1 weist anschliessend an den zylindrischen Aufnahmebereich 4 entgegen einer Aufnahmerichtung A des Bolzens 2 einen entgegen der Aufnahmerichtung A des Bolzens 2 verjüngten Bereich 7 auf. Der entgegen der Aufnahmerichtung A angeordnete Bereich der Bohrung 5 weist einen Durchmesser d1 auf, der geringfügig grösser ist als der Aussendurchmesser d2 des Bolzens 2.

Der radial elastisch aufweitbare, als kegelstumpfförmige Schraubenfeder 8 ausgebildete Ringkörper ist in Aufnahmerichtung A durch eine ringförmig umlaufende Anschlagschulter 9 abgestützt. Entgegen der Aufnahmerichtung A stützt sich die Schraubenfeder 8 am verjüngten Bereich 7 der Bohrung 5 ab. Die Schraubenfeder 8 ist vorzugsweise aus einem Federstahl gefertigt und weist im ungespannten Zustand eine grössere Länge auf als die axiale Länge I des Aufnahmebereichs 4. Der Aussendurchmesser der Schraubfeder 8 ist am aufnahmerichtungsseitigen Ende so bemessen, dass die sie in Kontakt mit der Wandung 6 der Bohrung 5 steht. Am gegenüberliegenden Ende ist die lichte Weite w kleiner als der Aussendurchmesser d2 des Bolzens 2.

Beim Einstecken des Bolzens 2 in die Bohrung 5 verkürzt sich die Schraubfeder 8 und erhält damit im Aufnahmebereich 4 radial Platz sich aufzuweiten. Durch die Vorspannung der Schraubfeder 8 bewegt sie sich über den Bolzen 2 schnappend und radial vorgespannt wieder in ihre axiale Ausgangsposition zurück. Somit ist der Bolzen 2 mit dem Aufnahmeteil 1 durch die Schraubfeder 8 verbunden. Bei Zugbelastung wird die Schraubfeder 8 gegen dem sich entgegen der Aufnahmerichtung A des Bolzens 2 sich verjüngenden Bereich 7 der Bohrung 5 gedrückt und ein radiales Aufweiten und somit ein Überschnappen verhindert. Die Schraubfeder 8 drückt auf die Mantelfläche 3 des Bolzens 2 unabhängig von der Form der Mantelfläche 3 und bildet eine kraftschlüssige Verbindung zwischen Bolzen 2 und Aufnahmeteil 1.

Bei der Fertigung wird beispielsweise die Schraubfeder 8 von dem aufnahmeseitig abgewandten Ende des Aufnahmeteils 1 in die Bohrung 5 eingebracht. Anschliessend wird das Aufnahmeteil 1 am aufnahmeseitig abgewandten Ende gestaucht, sodass die Anschlagschulter 9 entsteht die die Schraubfeder 8 abstützt und gegen den verjüngten Bereich 7 vorspannt.

## Patentansprüche

1. Verbindungselement für Bolzen (2) mit einem Aufnahmeteil (1) für den Bolzen (2), das mit einer Bohrung (5) versehen ist, die im Aufnahmeteil (1) einen zylindrischen Aufnahmebereich (4) aufweist und in der wenigstens ein Verriegelungselement angeordnet ist, das kraftschlüssig an den Bolzen (2) greift, wobei das Verriegelungselement von einem in Aufnahmerichtung (A) des Bolzens (2) abgestützten radial aufweitbaren Ringkörper gebildet ist, dessen lichte Weite (w) zumindest teilweise kleiner ist, als der Aussendurchmesser (d2) des Bolzens (2) und dessen axiale Länge im wesentlichen der Länge (I) des Aufnahmebereichs (4) entspricht, **dadurch gekennzeichnet, dass** sich die Bohrung (5) im Aufnahmeteil (1) entgegen der Aufnahmerichtung (A) des Bolzens (2) an den zylindrischen Aufnahmebereich (4) anschliessend wenigstens abschnittsweise entgegen der Aufnahmerichtung (A) des Bolzens (2) verjüngt.

2. Verbindungselement, nach Anspruch 1, **dadurch gekennzeichnet, dass** der Ringkörper als Federkörper ausgebildet ist.

3. Verbindungselement, nach Anspruch 2, **dadurch gekennzeichnet, dass** der Federkörper im entspannten Zustand eine grössere Länge aufweist als der Aufnahmebereich (4).

4. Verbindungselement, nach Anspruch 2 oder 3, **dadurch gekennzeichnet, dass** der Federkörper im wesentlichen als kegelstumpfförmige Schraubenfeder (8) ausgebildet ist.

5. Verbindungselement einem der Ansprüche 2 bis 4, **dadurch gekennzeichnet, dass** der Federkörper aus einem Federstahl besteht.

## Claims

1. A joining element for pins (2), comprising a receiving part (1) for the pin (2), which receiving element is provided with a bore (5) which has a cylindrical receiving region (4) in the receiving part (1) and in which at least one locking element is disposed which acts on the pin (2) by friction, wherein the locking element is formed by an annular body which can be radially expanded and which is supported in the direction (A) of receiving the pin (2), the inside diameter (w) of which locking element is smaller, at least in part, than the outside diameter (d2) of the pin (2), and the axial length of which substantially corresponds to the length (1) of the receiving region (4), **characterised in that** the bore (5) in the receiving part (1) tapers at least sectionally where it adjoins the cylindrical receiving region (4), in the direction opposite to the direction (A) of receiving the pin (2).

2. A joining element according to claim 1, **characterised in that** the annular body is formed as a spring body.

3. A joining element according to claim 2, **characterised in that** in its unstressed state the length of the spring body is greater than that of the receiving region (4).

4. A joining element according to claim 2 or 3, **characterised in that** the spring body is formed substantially as a conical coil spring (8).

5. A joining element according to any one of claims 2 to 4, **characterised in that** the spring body consists of spring steel.

## Revendications

1. Élément de liaison pour goujon (2), comprenant une pièce réceptrice (1) pour le goujon (2), laquelle est pourvue d'un trou (5) qui, dans la pièce réceptrice (1), comporte une zone réceptrice cylindrique (4) et dans lequel est disposé au moins un élément de verrouillage qui agit sur le goujon (2) par conjugaison de forces, l'élément de verrouillage étant formé par un corps annulaire déployable radialement qui prend appui dans la direction de réception (A) du goujon (2), dont l'ouverture libre (w) est au moins partiellement plus petite que le diamètre extérieur (d2) du goujon (2) et dont la longueur axiale correspond sensiblement à la longueur (1) de la zone réceptrice (4), **caractérisé en ce que** le trou (5) dans la pièce réceptrice (1) se rétrécit au moins par endroits à l'opposé de la direction de réception (A) du goujon (2) en se raccordant à la zone réceptrice cylindrique (4) à l'opposé de la direction de réception (A) du goujon (2).

2. Élément de liaison selon la revendication 1, **caractérisé en ce que** le corps annulaire est conformé en corps élastique.

3. Élément de liaison selon la revendication 2, **caractérisé en ce qu'**à l'état relâché le corps élastique présente une longueur supérieure à celle de la zone réceptrice (4).

4. Élément de liaison selon la revendication 2 ou 3, **caractérisé en ce que** le corps élastique est conformé sensiblement en ressort hélicoïdal tronconique (8).

5. Élément de liaison selon l'une des revendications 2 à 4, **caractérisé en ce que** le corps élastique est constitué d'acier à ressorts.
